# EUROPÄISCHE PATENTANMELDUNG

(11) **EP 1 320 064 A2**
(43) Veröffentlichungstag der Anmeldung: **18.06.2003**
(21) Anmeldenummer: 02027575.6
(22) Anmeldetag: 10.12.2002
(51) Int. Cl.: G06K 9/20

(54) **Verfahren und Anordnung zur verzerrungsarmen Aufnahme von an einer Kontaktfläche durch gestörte Totalreflexionen entstehenden Intensitätsmustern**

(30) Priorität: 14.12.2001 DE 10163351
(71) Anmelder: Heimann Biometric Systems GmbH, 07743 Jena (DE)
(72) Erfinder: Hillmann, Jürgen, 07745 Jena (DE)
(74) Vertreter: Freitag, Joachim, Dipl.-Phys.

(57) **Zusammenfassung**

Die Erfindung betrifft ein Verfahren und eine Anordnung zur Aufnahme von an einer Kontaktfläche durch gestörte Totalreflexion entstehenden Intensitätsmustern, insbesondere zur verzerrungsarmen Aufnahme von relativ großflächigen Finger-, Hand- oder Fußabdrücken oder anderen Hautpartien.

Die Aufgabe, eine neuartige Möglichkeit zur Aufnahme von an einer Kontaktfläche nach dem Prinzip der gestörten Totalreflexion entstehenden Intensitätsmustern zu finden, die mit einfachen optischen Mitteln die Ausgabe eines hochaufgelösten verzerrungsarmen Abbildes des Intensitätsmusters gestattet, wird erfindungsgemäß gelöst, indem eine Auflagefläche für das Messobjekt homogen mit einer Lichtquelle unter einem Winkel der Totalreflexion beleuchtet wird, ein Abbild der Auflagefläche als Intensitätsmuster lediglich über ein abbildendes optisches System auf den Bildsensor abgebildet wird, so dass das Abbild auf dem Bildsensor verzerrt, jedoch in allen Bildteilen scharf abgebildet ist und an der Auflagefläche totalreflektiertes Licht der Lichtquelle parallel zur Achse des optischen Systems eintritt, das Abbild der Auflagefläche durch den Bildsensor mit wesentlich mehr Bildelementen (Pixeln) abgetastet wird, als für die gewünschte Auflösung im ausgabeseitigen Endbild des Intensitätsmusters erforderlich sind, und das optoelektronisch gewandelte, trapezförmig verzerrte Abbild mittels Verschiebungs-, Interpolations- und Mittelungsoperationen auf Basis der Erzeugung von zusammengefassten Pixeldaten aus einem Datenüberschuss, der infolge der erhöhten Anzahl von aufgenommenen Pixeln gegenüber der notwendigen Zahl der Pixel des Endbildes vorhanden ist, entzerrt wird.

## Beschreibung

Die Erfindung betrifft ein Verfahren und eine Anordnung zur Aufnahme von an einer Kontaktfläche durch gestörte Totalreflexion entstehenden Intensitätsmustern, insbesondere zur verzerrungsarmen Aufnahme von relativ großflächigen Finger-, Hand- oder Fußabdrücken oder anderen Hautpartien.

Bei bekannten Geräten zur Aufnahme von Finger- und Handabdruck-Bildern, die nach dem Prinzip der inneren Totalreflexion (engl.: total internal reflection - TIR) an Prismen arbeiten, ist aufgrund einer perspektivischen Abbildung der Auflagefläche, bei der das Bild des Abdruckes trapezförmig verzerrt und in einer Richtung stark komprimiert wird, eine Korrektur notwendig, um an allen Stellen im Bild die gleiche Auflösung und den gleichen Abbildungsmaßstab für die Abbildung einer vorgegebenen rechteckigen Auflagefläche auf einen (meist quadratischen) Flächensensor zu erreichen.
Es sind bisher mehrere Möglichkeiten zur Korrektur der vorgenannten Verzerrung bekannt geworden:
- Zusätzliche Prismen zur Aufhebung der perspektivischen Verzerrung und Anpassung des Abbildungsmaßstabes in horizontaler und vertikaler Richtung (z.B. US 5,650,842 oder EP 0 308 162 A2),
- telezentrische Abbildungsoptiken auch im Zusammenwirken mit Zylinderlinsen zur Anpassung des Abbildungsmaßstabes in horizontaler und vertikaler Richtung (z.B. US 5,900,993),
- holografische Oberflächen (z.B. US 5,892,599),
- Zylinderlinsensysteme, die sich jedoch wegen ungenügender Korrekturmöglichkeiten für forensische Anwendungen nicht eignen (siehe z.B. Stoltzmann et al. "Versatile anamorphic electronic fingerprinting: Design and manufacturing considerations" SPIE Vol. 2537, Aug. 1995, S. 105-116)
- entzerrende Multi-Element-Strukturen (z.B. R. T. Hebert: "Off-axis optical elements in integrated, injection-molded assemblies", SPIE, Vol. 2600, Dez. 1995, S. 129-134).

Geräte mit zusätzlichen Korrekturprismen setzen eine starre Anordnung der Prismen und abbildenden Optikelemente zueinander voraus, was insbesondere Nachteile für einen Einbau des Gerätes in ein vorgegebenes Volumen mit sich bringt. Außerdem sind die Korrekturprismen im Verhältnis zu Rundoptiken teuer in der Herstellung und haben eine verhältnismäßig große Masse, die sich nachteilig auf die Gesamtmasse des Gerätes auswirkt. Der auftretende Farbfehler der Anordnung begrenzt zudem die optische Leistungsfähigkeit eines solchen Systems. Eine Beschreibung der Probleme beim Einsatz von Korrekturprismen geben Stoltzmann et al. in ihrem Artikel "Versatile anamorphic electronic fingerprinting: Design and manufacturing considerations" (a.a.O.) an.

Geräte mit telezentrischen Abbildungsoptiken sind allgemein lichtschwach und benötigen deshalb eine stärkere Beleuchtung, hochempfindliche Sensoren oder eine lange Zeit für die Bildgewinnung und sind damit anfällig für Störungen während der Bilderfassung. Der unterschiedliche Abbildungsmaßstab in horizontaler und vertikaler Richtung kann durch den Einsatz von Zylinderlinsen weitgehend korrigiert werden. Die Zylinderlinsen sind jedoch ebenso wie die für telezentrische Abbildung notwendigen großen Feldlinsen für die Anwendung bei großen Aufnahmeflächen zu teuer.
Generell sind zylindrische Optiken schwierig herzustellen (und damit teuer) und können vor allem nicht so gut korrigiert werden, dass der Einsatz für forensische Zwecke möglich ist.

Die Verwendung von holografischen Oberflächen wie sie z.B. in "Prism fingerprint sensor that uses a holographic optical element", Applied Optics, Vol. 35, Sept. 1996, S. 5242-5245, beschrieben wurde, ist ebenfalls nur auf den Einsatz bei kleinen Aufnahmeflächen, etwa für die Aufnahme von einzelnen Fingerabdrücken geeignet, da sie mit dem Prisma nur schwierig störstellenfrei zu verbinden sind und die Kosten des Gerätes in die Höhe treiben.

In wellenleitenden Multi-Element-Strukturen abgeformte Verschiebungs- und Neigungsoptiken (siehe z.B. R. T. Hebert a.a.O.) setzen die Herstellung komplexer optischer Oberflächen voraus, die schwierig herstellbar und dadurch teuer sind. Auch hier sind Linsen mit großen Durchmessern erforderlich, um eine akzeptable Lichtstärke des Systems zu erreichen, und eine restlose Beseitigung der Verzerrung wird nicht erreicht.

Der Erfindung liegt die Aufgabe zugrunde, eine neue Möglichkeit zur Aufnahme von an einer Kontaktfläche nach dem Prinzip der gestörten Totalreflexion entstehenden Intensitätsmustern zu finden, die mit einfachen optischen Mitteln ein hochaufgelöstes verzerrungsarmes Abbild des Intensitätsmusters erreicht. Eine erweiterte Aufgabe besteht darin, die Genauigkeit der Bildaufnahme so reproduzierbar zu gestalten, dass sie auch für forensische Zwecke zur Identifikation von Hautpartien geeignet ist.

Erfindungsgemäß wird die Aufgabe bei einer Anordnung zur verzerrungsarmen Aufnahme von an einer Auflagefläche durch gestörte Totalreflexion entstehenden Intensitätsmustern, mit einer Lichtquelle, einem Prisma, das die Auflagefläche beinhaltet, und einem Bildsensor, wobei die von der Lichtquelle beleuchtete Auflagefläche auf den Sensor derart abgebildet wird, dass an der Auflagefläche totalreflektiertes Licht der Lichtquelle, das teilweise durch Kontakt mit anliegenden Bereichen eines Messobjekts in seiner Totalreflexion gestört ist, als Intensitätsmuster der Auflagefläche auf den Bildsensor abgebildet wird, dadurch gelöst, dass zur Abbildung der Auflagefläche auf den Bildsensor lediglich ein abbildendes optisches System vorgesehen ist und der Bildsensor bezüglich der Achse des optischen Systems entgegengesetzt zur Neigung der Auflagefläche geneigt ist, so dass auf dem Bildsensor ein verzerrtes, aber in allen Bildteilen scharfes Abbild der Auflagefläche vorhanden ist, dass mit dem Bildsensor eine wesentlich größere Anzahl von Bildelementen (Pixeln) aufnehmbar ist, als sie für eine in einem ausgabeseitigen Endbild des Intensitätsmusters geforderte Auflösung notwendig wäre, und somit ein Datenüberschuss in Bezug auf das Endbild vorhanden ist, und dass dem Bildsensor eine Verarbeitungseinheit zur elektronischen oder rechnerischen Entzerrung von Bilddaten durch Änderung von Pixelschwerpunktdaten auf Basis von Verschiebungsprozessen und/oder Interpolations- und Mittelungsoperationen aus dem Datenüberschuss nachgeordnet ist, wobei infolge der erhöhten Zahl der Bildelemente gegenüber der notwendigen Zahl der Bildelemente des Endbildes des Intensitätsmusters eine verlustarme Entzerrung erfolgt.
Vorteilhaft ist die Auflagefläche, soweit diese in den zwei Dimensionen der Ebene unterschiedliche Abmessungen hat, eine Längsrichtung und eine Querrichtung aufweist und die Längsrichtung die größere Abmessung bezeichnet, mit der Längsrichtung parallel zu einer von einfallendem und reflektiertem Licht aufgespannten Reflexionsebene ausgerichtet und steht auf der Reflexionsebene senkrecht, so dass das Abbild der Auflagefläche annähernd eine quadratische Fläche des Bildsensors ausfüllt, wobei das Abbild der Auflagefläche in Längsrichtung gestaucht und in der Querrichtung trapezförmig verzerrt auf dem Bildsensor abgebildet wird.
Dabei weist das vom Bildsensor abgetastete Abbild der Auflagefläche in beiden Bilddimensionen eine mindestens um den Faktor 1,1 größere Anzahl von Pixeln auf,
als sie für die im entzerrten Endbild gewünschte Auflösung erforderlich ist.
Bei deutlich unterschiedlichen Seitenlängen der Auflagefläche wird vorzugsweise mit erhöhten Pixelzahlen in einer der Längsrichtung der Auflagefläche zugeordneten Abtastrichtung bis zu einem Faktor von 1,5 gearbeitet. Dazu ist zweckmäßig mit dem Bildsensor in einer Dimension seiner Aufnahmefläche, die gegenüber der optischen Achse des optischen Systems geneigt und der Längsrichtung der Aufnahmefläche zugeordnet ist, eine höhere Dichte der Pixel abtastbar als in der anderen Dimension.
Für die Realisierung beliebig ausgewählter Abtastdichten des Bildsensors zur Erzielung ausreichender Pixeldichten im auszugebenden Endbild sind unterschiedlichste Ausführungsformen des Bildsensors möglich.
In einer ersten vorteilhaften Variante weist der Bildsensor eine lichtempfindliche Fläche in Form einer Empfängermatrix (56) auf, wobei die Empfängermatrix (56) in der Dimension, die der Längsrichtung der Auflagefläche zugeordnet ist, eine höhere Dichte der Pixel aufweist als in der anderen Dimension.
Bei einer zweiten zweckmäßigen Möglichkeit, mit dem Bildsensor zweidimensional unterschiedliche Pixeldichten abzutasten, weist der Bildsensor eine Empfängermatrix (56) mit in beiden Dimensionen gleichmäßigen Pixelabständen auf, wobei die Empfängermatrix (56) zur Realisierung einer Subpixelabtastung mindestens in einer Dimension, die der Längsrichtung der Auflagefläche zugeordnet ist, um Bruchteile des Matrixrasters verschiebbar ist.
Dabei ist es in dieser Realisierungsform des Bildsensors von Vorteil, dass die Anzahl der abgetasteten Pixel des Abbildes bezüglich der Längs- und Querrichtung der Auflagefläche durch einen zweidimensionalen Microscan-Prozess von Subpixelabtastungen des Abbildes beliebig einstellbar ist.
Aber auch bei beliebiger Ausführung der Empfängermatrix ist die Anzahl der abgetasteten Pixel des Abbildes bezüglich der Längs- und Querrichtung der Auflagefläche zweckmäßig durch einen zweidimensionalen Microscan-Prozess mit unterschiedlicher Anzahl von Subpixelabtastungen des Abbildes beliebig einstellbar, wobei eine erhöhte Anzahl von Schritten in der Dimension des Abbildes, die der Längsrichtung der Auflagefläche zugeordnet ist, an die Stauchung des Abbildes in dieser Dimension angepasst ist.
Eine dritte vorteilhafte Gestaltung des Bildsensors mit in beiden Flächendimensionen unterschiedlicher Dichte der Pixel der lichtempfindlichen Fläche besteht darin, dass der Bildsensor in der Dimension der lichtempfindlichen Fläche, die der Querrichtung der Auflagefläche zugeordnet ist, eine Empfängerzeile aufweist, wobei die Empfängerzeile mit einer an die Verkürzung des Abbildes in der Längsrichtung der Auflagefläche angepassten Abtastschrittweite bewegt wird. Dabei kann die Empfängerzeile vorzugsweise mit einer an die reale Stauchung des Abbildes angepassten, sukzessive geänderten Abtastschrittweite bewegt werden, um die Entzerrung in dieser Dimension vollständig elektronisch, d.h. durch engere, z.T. überlappende Abtastung und anschließende Speicherung in einem gewöhnlichen, metrisch organisierten Bildspeicher (mit äquidistanten Pixelorten), auszuführen.
Die Anzahl der vom Bildsensor abgetasteten Pixel des Abbildes, bezogen auf das Verhältnis von Quer- zu Längsrichtung der Auflagefläche, hat bei den vorgenannten Varianten des Bildsensors zweckmäßig ein Verhältnis zwischen 0,5 und 1, wobei das Verhältnis vorzugsweise bei 0,9 liegt.

Zur Anpassung unterschiedlicher Verhältnisse von Längs- zu Querrichtung der Auflagefläche an das Format der lichtempfindlichen Fläche des Bildsensors sind vorteilhaft Prismen mit verschiedenen Brechungsindizes einsetzbar, wobei infolge des Austausches von Prismen mit verschiedenen Brechungsindizes unterschiedliche Winkel der Totalreflexion an der Auflagefläche und somit unterschiedliche Grade der Stauchung des Abbildes der Auflagefläche auf dem Bildsensor einstellbar sind. Um den Platzbedarf für die optische Abbildung der Auflagefläche auf die lichtempfindliche Fläche des Bildsensors zu minimieren, sind im optischen Strahlengang zwischen der Auflagefläche des Prismas und dem Bildsensor zweckmäßig Strahlumlenkelemente zur raumsparenden Faltung des Strahlengangs vorgesehen.

Des Weiteren wird die Aufgabe bei einem Verfahren zur Aufnahme von an einer Auflagefläche durch gestörte Totalreflexion entstehenden Intensitätsmustern, bei dem die Totalreflexion an der Auflagefläche durch Kontakt mit anliegenden Bereichen eines Messobjekts teilweise gestört wird, durch folgende Schritte gelöst:
- homogenes Beleuchten der Auflagefläche mit einer Lichtquelle unter einem Winkel der Totalreflexion,
- Abbilden der Auflagefläche auf einen Bildsensor derart, dass ein Abbild der Auflagefläche als Intensitätsmuster lediglich über ein abbildendes optisches System auf dem Bildsensor erzeugt wird, so dass das Abbild auf dem Bildsensor verzerrt, jedoch in allen Bildteilen scharf abgebildet ist und an der Auflagefläche totalreflektiertes Licht der Lichtquelle in das optische System eintritt,
- Aufnehmen des Abbildes der Auflagefläche durch den Bildsensor mit wesentlich mehr Bildelementen (Pixeln), als für die gewünschte Auflösung im ausgabeseitigen Endbild des Intensitätsmusters erforderlich sind, so dass ein Datenüberschuss gegenüber der geforderten Auflösung des auszugebenden Endbildes entsteht, und
- Entzerrung des optoelektronisch gewandelten, trapezförmig verzerrten Abbildes mittels elektronischer oder rechnerischer Entzerrung von Bilddaten auf Basis des Datenüberschusses, der infolge der erhöhten Anzahl von aufgenommenen Pixeln vorhanden ist, durch Änderung von Pixelschwerpunktdaten mittels Verschiebungsprozessen und/oder Interpolations- und Mittelungsoperationen zur Erzeugung von zusammengefassten Pixeldaten.

Vorteilhaft wird das optoelektronisch gewandelte, trapezförmig verzerrte Abbild mittels elektronischer Taktverschiebung und Verkämmung von Pixeldatenströmen im Auslese- und Speicherungsprozess eines Abbildes entzerrt, wobei der aus der erhöhten Anzahl von aufgenommenen Pixeln resultierende Datenüberschuss zur Erzeugung korrigierter Pixelorte benutzt wird. Dabei wird das Abbild vorzugsweise mit einer Empfängerzeile in unterschiedlich großen Abtastschritten in einer ersten Dimension des Bildsensors, die zur Achse des optischen Systems geneigt ist, abgetastet, wobei die Größe der Abtastschritte während einer Abtastung des kompletten Abbildes der Auflagefläche sukzessive entsprechend der realen Stauchung des Abbildes geändert wird und das optoelektronisch gewandelte Abbild durch metrisches, zeilenrichtiges Verkämmen der Datenströme der Pixelreihen und verändertes Takten der Datenströme von unterschiedlich langen Pixelreihen des Abbildes zu verdichteten Zeilen mit einheitlicher Pixelzahl elektronisch entzerrt wird.

In einer zweiten vorteilhaften Variante des Verfahrens wird das optoelektronisch gewandelte, trapezförmig verzerrte Abbild aus dem Datenüberschuss, der infolge der erhöhten Anzahl von aufgenommenen Pixeln vorhanden ist, allein mittels Berechnung von zusammengefassten Pixeldaten, die dem gewünschten Pixelraster des auszugebenden Endbildes entsprechen, auf Basis von Interpolations- und Mittelungsoperationen entzerrt. Dabei wird das Abbild der Auflagefläche zur Erhöhung der Abtastdichte vorteilhaft mit einer Empfängermatrix in beiden Dimensionen der Matrix in Subpixelschritten abgetastet und das elektronisch gewandelte Abbild durch elektronisches zeilenrichtiges Verkämmen und anschließende Berechnung von korrigierten Pixeldaten, die der metrischen Pixelzahl des gewünschten Endbildes entsprechen und Mittelungen und Interpolationen von prozentualen Signalanteilen benachbarter Pixel auf Basis einer Pixelzusammenfassung beinhalten, entzerrt.
Zweckmäßig wird das Abbild dazu in einer Dimension der Empfängermatrix, die gegenüber der Achse des optischen Systems geneigt ist, enger abgetastet, um eine in Längsrichtung der Auflagefläche infolge der Stauchung des Abbildes relativ geringere Abtastdichte teilweise zu kompensieren.
Es ist jedoch auch eine zweidimensional gleichmäßige (n × n)-Subpixelverschiebung als Abtastmuster der Empfängermatrix ohne Auflösungsverlust anwendbar, wenn die Abtastdichte entsprechend der Stauchung des Abbildes groß genug gewählt wird und die Stauchungskompensation allein durch Berechnung der zusammengefassten Pixel für das Endbild erfolgt.

In einer dritten Ausführung des Verfahrens kann das optoelektronisch gewandelte, trapezförmig verzerrte Abbild auf Basis des Datenüberschusses, der aus der erhöhten Anzahl von aufgenommenen Pixeln resultiert, auch mittels einer Kombination aus elektronischen Verschiebeprozessen und Berechnung von zusammengefassten Pixeldaten durch rechnerische Interpolations- und Mittelungsoperationen entzerrt werden.

Vorteilhaft erfolgt das Abtasten des Abbildes in der ersten Dimension, die zur Achse des optischen Systems geneigt ist, mit einer höheren Dichte der Zeilen einer Empfängermatrix gegenüber der zweiten Dimension, wobei das Abbild in der besagten ersten Dimension mindestens zu einem wesentlichen Teil elektronisch (d.h. durch engere Bildabtastung und Streckung im Wege einer metrischen Speicherung) gestreckt wird und die vollständige Entzerrung mittels Berechnung von zusammengefassten Pixeldaten erfolgt. Zur Erreichung unterschiedlicher Abtastdichten (Pixelzahlen) in den beiden Dimensionen des Abbildes sind sowohl Empfängermatrizen mit in Spalten- und Zeilenrichtung unterschiedlichem Abstand der lichtempfindlichen Elemente als auch symmetrische Empfängermatrizen mit geeigneter Verschiebeeinrichtung für eine (m × n)-Subpixelabtastung sowie eine mechanisch in Richtung der ersten Dimension bewegte Empfängerzeile verwendbar.

Der Grundgedanke der Erfindung basiert auf der Überlegung, dass eine optische Korrektur der Abbildungsverzerrung infolge der schrägen Strahlrichtung nach der Totalreflexion an der Auflagefläche wegen der benötigten speziellen optischen Systeme (Prismen und Zylinderoptiken) zuviel Platz benötigt und bezüglich Kosten und Justage zu aufwendig ist. Deshalb geht die Erfindung von der Modellierung der verzerrten Abbildung aus, die an sich einfach über eine Zentralprojektion beschrieben werden und somit - mathematisch einfach berechenbar - zu einer elektronischen und/oder rechentechnischen Entzerrung des Abbildes der Auflagefläche verwendet werden kann. Erfindungsgemäß ist demnach lediglich ein in allen Bildteilen scharfes Abbild der Auflagefläche erforderlich, wobei die Entzerrung des Abbildes erst mit der Abtastung des Abbildes durch den Bildsensor beginnt. Grundvoraussetzung für die verlustarme (oder auch "verlustfreie") Entzerrung des Abbildes der Auflagefläche ist eine ausreichend hoch aufgelöste Abtastung des verzerrten Abbildes der Auflagefläche, die bei der Entzerrung des Abbildes ausreichend Stützstellen für die erfindungsgemäßen Interpolations- und Mittelungsoperationen bereitstellt. Dazu sind an die Abtastdichte bestimmte Mindestanforderungen zu stellen. Bestimmte Abtastmuster oder geeignete mechanische Voraussetzungen des Bildsensors (ungleiche Abtastdichten in den beiden Dimensionen des Abbildes) vereinfachen bzw. verkürzen die Korrekturrechnungen, die im Wesentlichen auf einer Zusammenfassung von abgetasteten Pixeln des Abbildes beruht, wobei die Zusammenfassung unter Berücksichtigung des modellierten Verzerrungsmusters und entsprechend dem Pixelraster, das für die gewünschte Auflösung im auszugebenden Endbild erforderlich ist, vorgenommen wird.

Mit der Erfindung ist es möglich, von an einer Kontaktfläche nach dem Prinzip der gestörten Totalreflexion entstehenden Intensitätsmustern eine Bildaufnahme zu realisieren, die mit einfachen optischen Mitteln ein hochaufgelöstes, verzerrungsarmes Abbild des Intensitätsmusters erzeugt. Das Gewicht einer erfindungsgemäßen Anordnung wird im Wesentlichen nur noch von Prisma, Objektiv, Bildsensor und mechanischen Verbindungselementen sowie der (gewichtsmäßig vernachlässigbaren) Auswerteelektronik bestimmt und kann damit auch bei großen Auflageflächen relativ gering gehalten werden.
Weiterhin ist die Anordnung wegen der fehlenden Notwendigkeit von optischen Korrekturelementen unempfindlich gegen Dejustierung, so dass sie für forensische Zwecke zur Identifikation von Hautpartien bestens geeignet ist. Die fehlenden optischen Korrekturelemente wirken sich außerdem auf die Baugröße der erfindungsgemäßen Anordnung positiv aus, da der optische Strahlengang zwischen Prisma und optisch abbildendem System beliebig zur Umlenkung durch Planspiegel genutzt werden kann.

Die Erfindung soll nachstehend anhand von Ausführungsbeispielen näher erläutert werden. Die Zeichnungen zeigen:
- Fig. 1:: eine schematische Darstellung der Erfindung mit einer rechnerischen Korrektur eines höhenmäßig gestauchten trapezförmigen Abbildes der Auflagefläche,
- Fig. 2:: eine schematische Darstellung der Erfindung mit wenigstens teilweiser elektronischer Korrektur des gestauchten trapezförmigen Abbildes der Auflagefläche,
- Fig. 3:: eine Rasterdarstellung des verzerrten Abbildes gegenüber der rechteckigen Auflagefläche,
- Fig. 4:: den erfindungsgemäßen Lösungsansatz für die umkehrbar eindeutige Zuordnung der Pixel des verzerrten Abbildes zu den Pixeln des entzerrten Endbildes durch Zentralprojektion,
- Fig. 5:: eine Prinzipdarstellung der erfindungsgemäßen Entzerrung auf Basis der Zentralprojektion in Richtung der optischen Achse betrachtet, sowie eine Gegenüberstellung zu herkömmlicher verlustbehafteter Entzerrung,
- Fig. 6:: eine Variante der Erfindung mit teilweiser elektronischer Entzerrung des Abbildes durch unterschiedliche Abtastdichten in den beiden Dimensionen des Bildsensors,
- Fig. 7:: eine Variante der Erfindung, bei der eine vollständige elektronische Entzerrung des Abbildes durch ungleichmäßige Abtastdichten in einer Dimension des Bildsensors und anschließende unterschiedliche Auslesetakte in der anderen Dimension erfolgt,
- Fig. 8:: eine Variante der Erfindung mit einer in Mikroscan-Schritten verschobenen Empfängermatrix zur Realisierung von vollständig rechentechnischer als auch einer Kombination aus elektronischer und rechnerischer Entzerrung,
- Fig. 9:: Darstellung der Methodik der rechnerischen Entzerrung durch Interpolation und Mittelung von Pixelumgebungen anhand eines stark vergrößerten Flächenelements des verzerrten Abbildes.

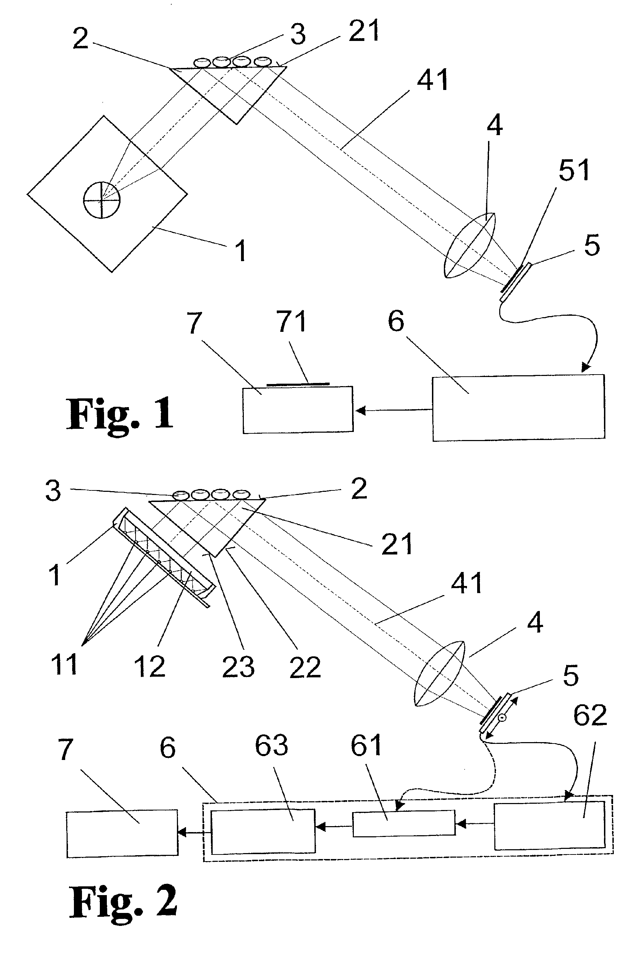

Die erfindungsgemäße Anordnung besteht in ihrem Grundaufbau - wie in Fig. 1 dargestellt - aus einer Lichtquelle 1, einem Prisma 2 mit einer Auflagefläche 21, mit der ein Messobjekt 3 (z.B. die Finger einer Hand oder andere Hautpartien eines Menschen) in Kontakt gebracht wird, einem optisch abbildenden System, vorzugsweise einem herkömmlich verfügbaren Objektiv 4, und einem Bildsensor 5. Das Objektiv 4 erzeugt dabei eine scharfe Abbildung der Auflagefläche 21 unter einem Winkel der Totalreflexion des von der Lichtquelle 1 kommenden Lichts auf dem Bildsensor 5. Dem Bildsensor 5 nachgeordnet schließen sich eine Entzerrungseinrichtung 6 und eine Ausgabeeinheit 7 an.

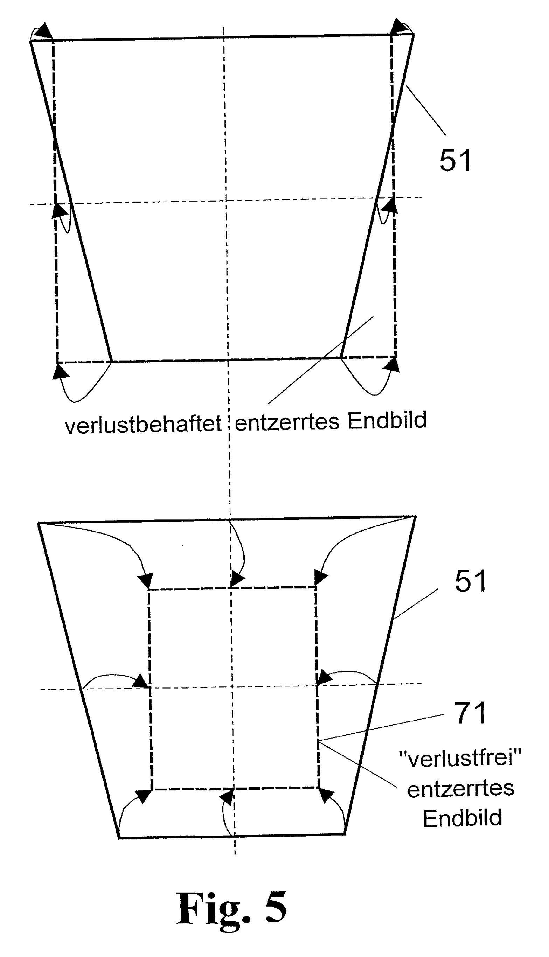

Fig. 2 zeigt gegenüber Fig. 1 eine speziellere Ausgestaltung, bei der die Entzerrungseinrichtung 6 mindestens einen Bildspeicher 61, dem bereits eine elektronische Entzerrungseinheit 62 vorgeordnet ist, und eine rechentechnische Entzerrungseinheit 63 enthält. Die elektronische Entzerrungseinheit 62 ist dabei eng mit einer dem Bildsensor 5 zugehörigen Abtast- und Auslese -Einheit 52 (die ggf. auch Scanmechanismen mit beinhaltet) verknüpft. Dabei kann die Entzerrungseinrichtung 6 sowohl nur eine elektronische Entzerrungseinheit 62 oder nur eine rechentechnische Entzerrungseinheit 63 als auch eine aufeinanderfolgende Kombination beider Einheiten 62 und 63 enthalten. Die für die drei Fälle notwendigen Voraussetzungen werden unten noch genauer erläutert. Die gezeigte optische Anordnung enthält das Prisma 2, vorzugsweise ein 90°-Prisma aus BK7, mit seiner Lichteintrittsfläche 23 gegenüber einer flächenhaften Lichtquelle 1, die aus speziell für gleichmäßige Ausleuchtung geeigneten breitstrahlenden LEDs 11 sowie einer Streuscheibe 12 aus Kunststoff besteht, das Objektiv 4, das vorzugsweise ein Tessar 4,5/50 oder ähnliches für CCD-Anwendungen oder LCD-Projektion geeignetes Objektiv ist und dessen Modulationsübertragungsfunktion (MTF) so ausgebildet ist, dass Strukturen in der Größe der lichtempfindlichen Pixel des Sensorarrays mit mindestens 10% aufgelöst werden, sowie einen Bildsensor 5 mit quadratischer Sensorfläche wobei ein Pixelraster verwendet wird, welches in x-Richtung dx größer als in y-Richtung dy ist (wie Fig. 5). Die Auflagefläche 21 des Prismas 2 und die Lichtaustrittsfläche 22 sind plan und optisch feinpoliert.

Zunächst soll auf die optischen Bedingungen der Bildaufnahme genauer eingegangen werden.
Damit die Auflagefläche 21 in allen Bildteilen tatsächlich scharf abgebildet wird, sind die Auflagefläche 21 und der Bildsensor 5 bezüglich der optischen Achse 41 des Objektivs 4 gegensätzlich geneigt (nach Scheimpflug) angeordnet. Auf dem Bildsensor 5 entsteht - infolge der an den Kontaktstellen gestörten inneren Totalreflexion im Prisma 2 - ein Abbild 51 mit hohem Kontrast und hoher Auflösung, es ist jedoch perspektivisch verzerrt. Das Ergebnis der optisch verzerrten Übertragung ist ein trapezförmiges, höhenverkürztes, aber scharfes Abbild 51 der Auflagefläche 21, wobei die Höhenverkürzung zweckmäßig bei einer im Wesentlichen rechteckigen Auflagefläche 21 in der längeren Dimension (nachfolgend erste Dimension in Längsrichtung der Auflagefläche 21) erfolgt, um das Abbild 51 besser an vorrangig verfügbare Bildsensoren 5 mit quadratischer oder annähernd quadratischer lichtempfindlicher Empfängerfläche 53 anzupassen.
Durch eine Veränderung der Neigung der optischen Achse 41 des Objektivs 4 zu der Auflagefläche 21 des Prismas 2 kann in Abhängigkeit von der Brennweite des verwendeten Objektivs 4 die perspektivische Verzerrung (Höhenverkürzung des Abbildes 51 bzw. Längsverkürzung der Auflagefläche 21) verändert werden. Damit sind die Dimensionen des Abbildes 51 und die Seitenverhältnisse der lichtempfindlichen Empfängerfläche 53 (innerhalb der durch das Prinzip der Totalreflexion vorgegebenen Grenzen) aneinander anpassbar. Vorzugsweise ist die Lichtaustrittsfläche 22 des Prismas 2 so gestaltet, dass diese zur Vermeidung von Farbfehlern senkrecht auf der optischen Achse 41 steht. Das bedeutet aber auch, dass das Prisma 2 nicht notwendig ein 90°-Prisma ist.
Andererseits sind aber auch geringe Abweichungen (unter Inkaufnahme eines Farbfehlers, der mit einer monochromatischen Lichtquelle 1 gering gehalten werden kann) in Richtung eines größeren Winkels zwischen Auflagefläche 21 und

Lichtaustrittsfläche 22 des Prismas 2 zwecks einer teilweise optischen Entzerrung (Verringerung der Längsverkürzung) des Abbildes 51 möglich und sinnvoll.

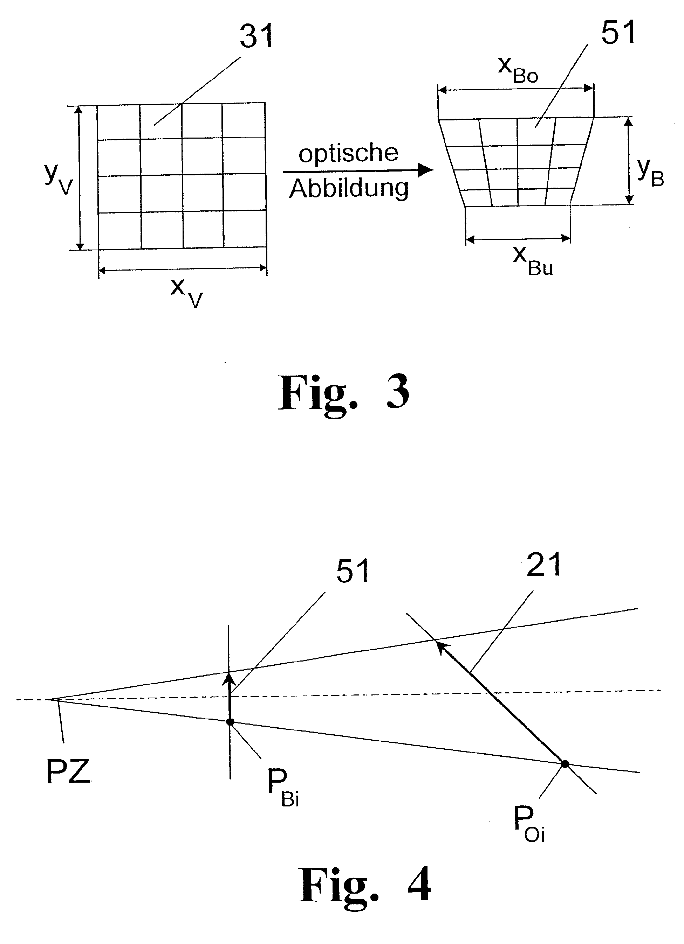

Fig. 3 zeigt links eine rechteckige Vorlage 31 mit einer Breite xᵥ und einer Höhe yᵥ, die auf die Auflagefläche 21 des Prismas 2 aufgebracht und über das Objektiv 4 auf den Bildsensor 5 abgebildet wird. Zur Verdeutlichung der Übertragungsfunktion der Vorlage 31 auf den Bildsensor 5 sind zusätzlich regelmäßige Rasterlinien in der Vorlage 31 eingezeichnet. Diese zeigen besonders deutlich, dass das rechts in Fig. 3 dargestellte Abbild 51 trapezförmig verzerrt ist mit einer kleineren unteren Breite X_{Bu} und einer größeren oberen Breite X_{Bo} sowie einer zusätzlich gestauchten Höhe der Trapezform in y-Richtung um einen Faktor von ca. 1,4. Dieser Faktor gestattet es, eine (z.B. zur Aufnahme von Vier-Finger-, vollständigen Hand- oder Fußabdrücken) zweckmäßige langgestreckte Rechteckform der Auflagefläche 21 an die kommerziell gängige annähernd quadratische Form der lichtempfindlichen Empfängerfläche 53 anzugleichen, um den Bildsensor 5 möglichst vollständig auszunutzen. Deshalb wird am Prisma 2 die Ebene der Totalreflexion, die durch die Richtungen von einfallendem Licht und an der Auflagefläche 21 total reflektiertem Licht aufgespannt wird und in Fig. 1 und 2 parallel zur Zeichenebene verläuft, vorzugsweise in Richtung der größten Ausdehnung der Auflagefläche 21 ausgerichtet.
Den Lösungsansatz für die Korrektur der in Fig. 3 dargestellten Verzerrung des Abbildes 51 gegenüber der Vorlage 31 liefert Fig. 4, die das Schema einer eindimensionalen Zentralprojektion wiedergibt. Dieser Lösungsansatz wird zur Entzerrung des Abbildes 51 zweidimensional angewendet. Mit der Annahme eines Projektionszentrums PZ erhalten alle auf der Empfängerfläche 53 des Bildsensors 5 befindlichen Bildpunkte (Pixel) P_{Bi} eine umkehrbar eindeutige (eineindeutige) Zuordnung zu einem bestimmten Objektpunkt P_{Oi}. Durch die zweidimensionale Beschreibung dieses Zusammenhangs mittels mathematischer Matrizen erhält man eine rechentechnisch gut handhabbare Lösung für die Entzerrung des Abbildes 51.

Da die lichtempfindlichen Elemente 54 des Bildsensors 5 diskret angeordnet sind, ist es notwendig, während oder nach der Entzerrung mittels Schwerpunktverfahren oder anderer Verfahren (Interpolations- und Mittelungsverfahren) aus einer Anzahl von Umgebungspixeln prozentuale Anteile der (dem eingefallenen Licht proportionalen) Ladungsmengen zu einem Grauwert eines gesuchten diskreten Pixels (Bildelementfläche) im korrigiert auszugebenden Endbild zu bestimmen, wobei die Größe der Pixel des Endbildes durch die im Endbild (in der Ausgabeeinheit 7) gewünschte Auflösung vorgegeben ist.
Damit die Entzerrung des Abbildes 51 "ohne Informationsverlust" erfolgt, d.h. ohne dass für eine beliebige Flächeneinheit des Endbildes 71 durch Interpolation Pixel errechnet werden, die durch eine gegenüber dem Endbild 71 geringere Anzahl von Pixeln pro Flächeneinheit im Abbild 51 gestützt sind, ist gegenüber der gewünschten Anzahl von Pixeln im Endbild eine wesentlich größere Anzahl von Abtastpunkten im Abbild 51, d.h. von lichtempfindlichen Elementen 54 des Bildsensors 5, die durch das Abbild 51 beleuchtet sind, erforderlich. Dies ist insbesondere in Richtung der Höhenverkürzung des Abbildes 51 bezüglich der Längsrichtung der Auflagefläche 21 notwendig.
Eine eindrucksvolle Darstellung des erfindungsgemäßen Prinzips der verlustarmen (nach dem mathematischen Prinzip der Zentralprojektion sogar eigentlich "verlustfreien") Entzerrung zeigt Fig. 5 in Gegenüberstellung zu einer üblichen verlustbehafteten Entzerrung einer trapezförmigen Verzerrung. Das Prinzip der rechnerischen Entzerrung gemäß der Erfindung ist - wie der unteren Darstellung von Fig. 5 zu entnehmen ist - eine die Verzerrung einrechnende, weitere Komprimierung der aufgenommenen (beleuchteten) Pixel 55 des Abbildes 51 (nachfolgend auch Bilddaten genannt).
Das bei der Entzerrung angewendete Verfahren kann auch in zwei Schritten erfolgen, indem erst eine, dann die andere Dimension entzerrt wird. Bei einer "verlustfreien" Entzerrung geht man davon aus, dass das verzerrte Abbild 51 in beiden Dimensionen mehr Pixel hat und damit größer als das entzerrte Endbild 71 ist. Durch die eindeutige Zuordnung von Pixeln im Abbild 51 und im entzerrten Endbild 71 ist es möglich, die Pixel des verzerrten Abbildes 51 auf die Pixel im Endbild 71 ohne signifikanten Verlust an benötigter Information zu transformieren, weil im Abbild 51 ein Überschuss an Information infolge der größeren Abtastdichte vorhanden ist. Bei der herkömmlichen Entzerrung einer trapezförmigen Verzeichnung, wie sie im oberen Teil der Fig. 5 dargestellt ist, ist die Korrektur verlustbehaftet, da mindestens in Teilen des Abbildes 51 aus einem Pixel im verzerrten Abbild 51 die Information für mehr als ein Pixel im entzerrten Bild gewonnen wird. Das bedeutet, dass die abgetastete Bildinformation gedehnt wird und somit nicht jedes Pixel im entzerrten Bild die zur geforderten Auflösung benötigte definiert diskrete Information trägt.

Die Entzerrung gemäß der Erfindung verläuft konkret nach folgendem Schema:
- homogenes Beleuchten der Auflagefläche 21 mit einer Lichtquelle 1 unter einem Winkel der Totalreflexion,
- Abbilden der Auflagefläche 21 auf einen Bildsensor 5 derart, dass ein Abbild der Auflagefläche als Intensitätsmuster lediglich über ein abbildendes optisches System 4 auf dem Bildsensor 5 erzeugt wird so dass das Abbild 51 auf dem Bildsensor 5 verzerrt, jedoch in allen Bildteilen scharf abgebildet ist und an der Auflagefläche 21 totalreflektiertes Licht der Lichtquelle 1 parallel zur optischen Achse 41 des optischen Systems 4 eintritt,
- Aufnehmen des Abbildes 51 der Auflagefläche 21 durch den Bildsensor mit wesentlich mehr Bildelementen (Pixeln), als für die gewünschte Auflösung im ausgabeseitigen Endbild des Intensitätsmusters erforderlich sind, und
- Entzerrung des optoelektronisch gewandelten, trapezförmig verzerrten Abbildes 51 mittels Interpolations- und Mittelungsoperationen auf Basis der Erzeugung von zusammengefassten Pixeldaten aus einem Datenüberschuss, der infolge der erhöhten Anzahl von aufgenommenen Pixeln vorhanden ist.

Das vom Bildsensor 5 aufgenommene Abbild 51 ist je nach Brechzahl des Glases des Prismas 2, Brennweite des verwendeten abbildenden Objektivs 4 und Neigung der Auflagefläche 21 zur optischen Achse 41 des Objektiv 4 unterschiedlich stark gestaucht und trapezförmig verzerrt. Diese Verzerrung der abgebildeten Auflagefläche 21 wird nachfolgend durch eine optoelektronische und/oder rechentechnische Entzerrung/Korrektur beseitigt.

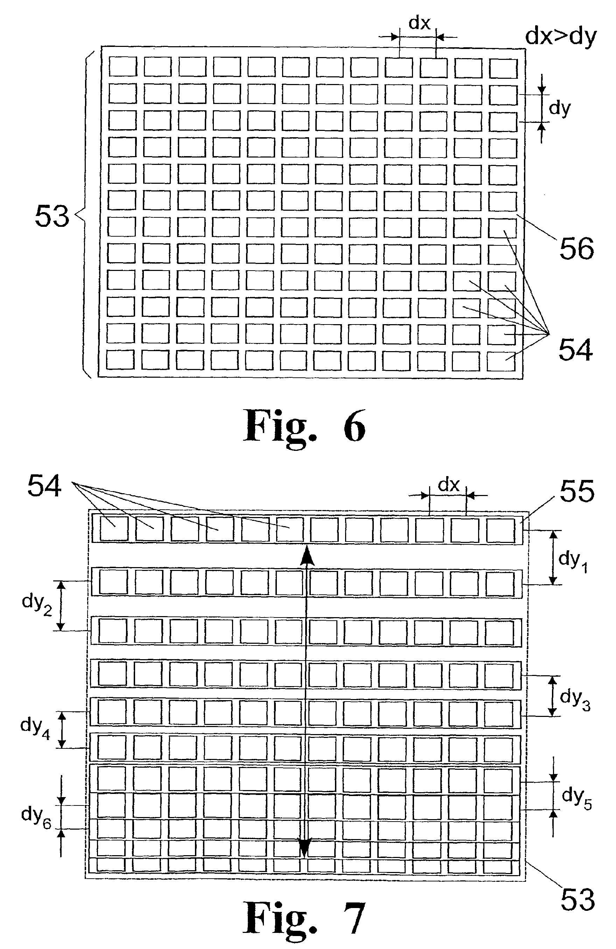

Die Verzerrung wird in einem ersten Beispiel - auf Basis der Darstellung von Fig. 6 verdeutlicht - so gewählt, dass durch unterschiedliche Abmessungen der Sensorelemente 54 des Bildsensors 5 in vertikaler und horizontaler Richtung (oder bei Sensoranordnungen mit mechanischer Sensorverschiebung durch eine in horizontaler und vertikaler Richtung unterschiedliche Anzahl von Abtastschritten) diese Verzerrung mindestens teilweise aufgehoben wird und die Seitenverhältnisse von Auflagefläche 21 und Empfängerfläche 53 optimal aufeinander abgestimmt sind.

Weiterhin wird die Anzahl der Sensorelemente 54 des Bildsensors 5 so gewählt, dass der Bildsensor 5 mehr Bildpunkte pro Flächeneinheit liefert, als für das korrigierte (entzerrte) Endbild 71 gefordert wird. Die so erhaltene höhere Informationsdichte ist für die anschließende elektronische oder rechentechnische Korrektur der Verzerrung notwendige Voraussetzung, um Informationsverluste zu minimieren bzw. eine Auflösungsverringerung zu vermeiden. Dazu ist der Bildsensor 5 so gestaltet, dass er in Richtung der komprimierten ersten Dimension (y-Richtung) des Abbildes 51, die der Längsausdehnung der Auflagefläche 21 zugeordnet ist, einen geringeren (Mitten-) Abstand (nachfolgend auch: Pixelraster) dy der Sensorelemente 54 als in der anderen Richtung mit dem Pixelabstand dx aufweist.
Wird anstelle eines Matrixempfängers ein mechanisch abtastendes System als äquivalente Bildaufnahmeeinrichtung eingesetzt, so sind in Analogie zur Matrixabtastung mehr und engere Abtastschritte in y-Richtung auszuführen, so dass in der mechanisch abgetasteten y-Richtung ein geringeres Pixelraster dy der in gleicher Weise entsteht.
Die Komprimierung der ersten Dimension (Längsausdehnung) der Aufnahmefläche 21 wird dabei so ausgenutzt, dass beliebige Aufnahmeflächen 21 mit deutlich ungleichen Seitenlängen auf quadratische oder annähernd quadratische Bildsensoren 5 abgebildet werden können. Selbstverständlich sind auch rechteckige Sensoranordnungen verwendbar, wenn dabei von vornherein bestimmte Gruppen von Sensorelementen ungenutzt (unbelichtet) bleiben.
Als besonders geeigneter Bildsensor 5 wird eine CCD-Matrix 56 (SONY, Typ ICX055) mit 500 x 582 Pixeln und einem Pixelraster von 9.8 x 6.3 µm² eingesetzt. Es sind jedoch auch andere CCD- oder CMOS-Matrizen geeignet.
Durch die perspektivische Verzerrung bei der Abbildung wird das Abbild 51 der Auflagefläche 21 in Längsrichtung etwa um den Faktor 1,4 komprimiert. Das in y-Richtung kleinere Pixelraster hebt diese Verzerrung teilweise auf, jedoch mit einem konstanten Faktor. Dadurch bleibt eine Restverzeichnung in y-Richtung erhalten. Diese muss noch durch nachfolgende rechentechnische Operationen ausgeglichen werden.

Die Verzeichnung in x-Richtung kann durch elektronische Verfahren beseitigt werden oder durch rechentechnische Operationen in einem Verfahrensschritt mit der Restverzeichnung in y-Richtung.

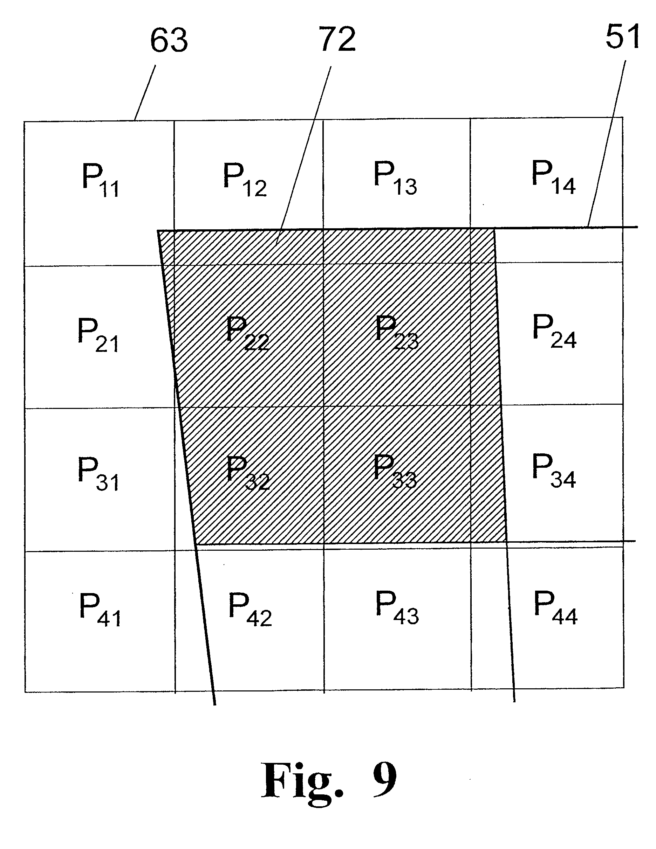

Eine vollständig elektronische Beseitigung der Stauchung des Abbildes 51 in y-Richtung ist durch die mechanische Abtastung des Abbildes 51 durch eine Empfängerzeile 55 möglich, wie sie stilisiert in Fig. 7 dargestellt ist. Die Empfängerzeile 55 hat so viele Pixel, dass mindestens die für das Gesamtsystem geforderte Auflösung in x-Richtung überall im Endbild 71 unter dem Gesichtspunkt "verlustfreier" Entzerrung erreicht wird bzw. dass die Abtastung mit einer weitaus höheren Auflösung erfolgt, um bei der Korrektur durch Interpolations- und
Mittelungsoperationen eine Redundanz der Pixelberechnungen im Endbild 71 zu erreichen. Dazu ist prinzipiell jede Empfängerzeile 55 mit einer ausreichenden Zahl von lichtempfindlichen Elementen 54 geeignet, die mindestens 10 % mehr Elemente, als in der entsprechenden Dimension des Endbildes 71 Pixel erforderlich sind, aufweist. Die Empfängerzeile 55 wird in der Bildebene des Objektivs 4 orthogonal zu ihrer Längsausdehnung schrittweise oder kontinuierlich verschoben.
Durch die bei der Abbildung auftretende perspektivische Verzerrung wird das Abbild 51 der Auflagefläche 21 orthogonal zur Ausrichtung der Empfängerzeile 55 etwa um den Faktor 1,4 komprimiert. Dadurch entsteht im Abbild 51 ein Seitenverhältnis von 1 : 0,77.
Durch eine angepasste Wahl der Abtastschrittweite bei der Bewegung der Empfängerzeile 55 derart, dass die Abtastschrittweite dy (wie in Fig. 7 dargestellt) von oben beginnend nach unten mit dy1>dy2>dy3>......>dyi entsprechend dem Auflösungsverlust durch die perspektivische Verzerrung in y-Richtung immer kleiner wird, kann im nachgeordneten Bildspeicher 61 infolge der Fiktion eines gleichmäßigen Pixelrasters die perspektivische Verzerrung in y-Richtung bereits in einfacher Weise komplett aufgehoben werden. Diese Vorgehensweise entspricht der weiter oben bereits mehrfach angesprochenen "vollständig elektronischen" Entzerrung in einer ersten Dimension (y-Richtung).
Wird eine kontinuierlich in y-Richtung bewegte Empfängerzeile 55 verwendet, wird sinngemäß die Bewegungsgeschwindigkeit angepasst.
Im Ergebnis dieser speziellen mechanischen Abtastprozedur entsteht ein Abbild 51, welches in y-Richtung komplett entzerrt, jedoch in x-Richtung in Abhängigkeit von der y-Position noch unterschiedlich stark verzerrt ist. Diese Verzerrung in x-Richtung wird anschließend vollständig und quasi verlustfrei beseitigt entweder durch elektronische Korrektur oder - wie weiter unten (zu Fig. 9) näher beschrieben-rechentechnische Operationen in Form einer mathematischen Zuordnung einer größeren Zahl von Pixeln auf eine kleinere Pixelzahl des Endbildes 71.
Die vorstehend erwähnte elektronische Korrektur in Zeilenrichtung (x-Richtung) der Empfängerzeile 55 verwendet das analoge Ausgangssignal der Empfängerzeile 55, dem durch Taktung bei Originalbeschaltung eine bestimmte Pixelzuordnung zugewiesen ist. Auf Basis des Datenüberschusses infolge der deutlich größer gewählten Anzahl der lichtempfindlichen Elemente 54 der Empfängerzeile 55 gegenüber der geforderten Pixelzahl (Auflösung) im Endbild 71 wird das analoge Ausgangssignal in Kenntnis der Größe der trapezförmigen Verzerrung (gemäß der Modellierung des Abbildungsprozesses nach Fig. 4) je Zeilenauslesung der Empfängerzeile 55 einer neuen Taktung unterworfen, deren Taktfrequenz zu der im Endbild 71 gewünschten Pixelzahl führt. Das Ergebnis ist dann ein komplett elektronisch entzerrtes Bild mit voller Bildqualität der abgebildeten Auflagefläche 21.

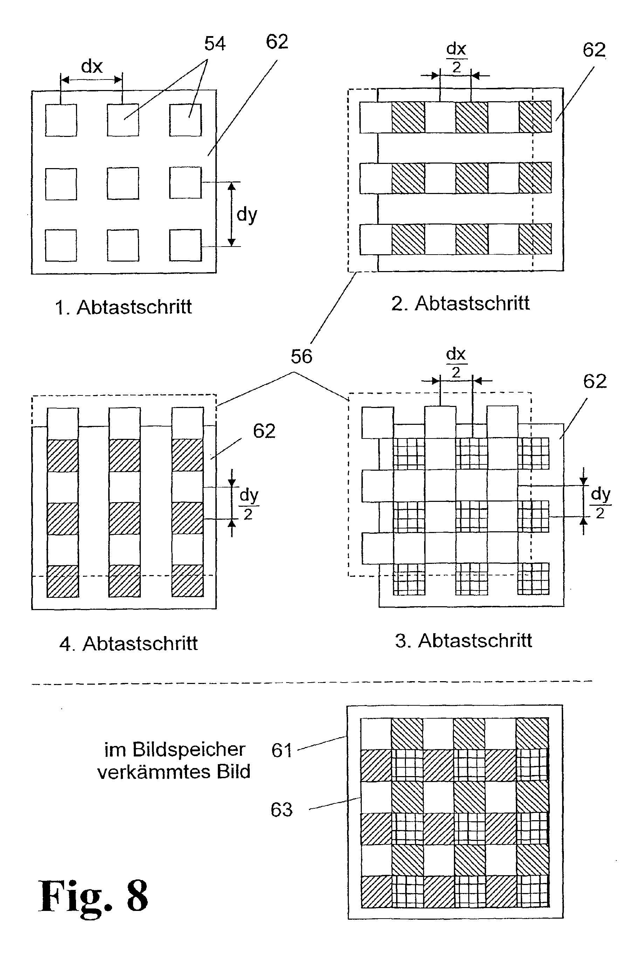

Im folgenden Beispiel wird auf die Beschreibung einer elektronischen Entzerrung durch unterschiedliche Abtastdichten in den unterschiedlichen Bilddimensionen verzichtet, obwohl diese im Wege unterschiedlicher Pixelraster implizit enthalten sein kann. Beschrieben wird eine Subpixelabtastung gemäß Fig. 8, wobei ein nxn-Mikroscan in seiner Anwendung im Sinne der erfindungsgemäßen Bildentzerrung angenommen wird.
Als Bildsensor 5 wird eine CCD-Matrix 56 mit 1300x1030 quadratischen Pixeln und einem Pixelraster von 6.7 x 6.7 µm² (z.B. SONY, Typ ICX085AL oder eine andere geeignete CCD- oder CMOS-Matrix) eingesetzt. Die in Fig. 6 schematisch dargestellte Matrix 56, die lichtempfindliche Elemente 54 in einem Feld von 8,71 x 6,9 mm² aufweist, wird so angeordnet, dass die kurze Seitenlänge der gestauchten ersten Dimension (y-Richtung) des Abbildes 51 (siehe Fig. 2: in der Zeichenebene sichtbare Ausdehnung des Abbildes 51) zugeordnet wird.
Bei einer Auflagefläche von 78 x 86 mm² wird durch das Objektiv 4 und die auftretende perspektivische Verzerrung das trapezförmige Abbild 51 mit einem umschreibenden Rechteck von 8.71 x 6.86 mm² auf die Matrix 56 abgebildet, welches dem Feld der lichtempfindlichen Elemente 54 auf der Matrix 56 nahezu entspricht. Durch die Abbildung wird damit aus der Auflagefläche 21 mit einem Seitenverhältnis von etwa 1:1,1 wird ein Abbild 51, das die Matrix 56 mit einem Seitenverhältnis von 1: 0,79 voll ausnutzt.
Die meist für forensische Anwendungen geforderte Auflösung von mindestens 500 dpi für das Endbild 71 der Auflagefläche 21 kann mit einer solchen Anordnung nur erreicht werden, wenn die Matrix 56 wenigstens mit einem (2 x 2) - Mikroscan mit der Schrittweite von ½ Pixelabstand (hier 3,35 µm) in beiden Richtungen bewegt wird (wie in Fig. 2 durch Pfeile am Bildsensor 5 angegeben, wobei die Bewegung in y-Richtung wie sichtbar und in x-Richtung senkrecht zur Zeichenebene erfolgt).
Fig. 8 zeigt in ihren fünf Teilabbildungen zunächst vier im Quadrat angeordnete (bezüglich der Pixelzahl) reduzierte Darstellungen der Abtastschritte eines (2 x 2) - Mikroscans sowie unterhalb eine Strichlinie das verkämmte Ergebnisbild 63. Die in vier unterschiedlichen Positionen erhaltenen Teilbilder 62, die durch unterschiedliche Füllungen der lichtempfindlichen Elemente 54 gekennzeichnet sind, werden anschließend im Bildspeicher 61 verkämmt zu einem (noch immer trapezförmig verzerrten) Ergebnisbild 63 mit 2600 x 2060 Pixeln, wie es unterhalb der vier Teilbilder 62, getrennt durch eine gestrichelte Linie, vereinfacht dargestellt ist. Damit wird die Bildfläche des Abbildes 51 enger (hier: lückenlos) abgetastet, d.h. die Auflösung im Abbild 51 erhöht.
Dieses trapezförmig verzerrte Ergebnisbild 63 wird mit einem vorher ermittelten Korrekturparametersatz rechentechnisch in der Entzerrungseinheit 6 (siehe Fig. 1) entzerrt. Bei einer geforderten Auflösung von 500 dpi entsteht ein korrigiertes Endbild 71 mit ca. 1535 x 1690 Pixeln, das in der Ausgabeeinheit 7 zur weiteren Verwendung (z.B. Personenidentifikation, forensische Personenkartei etc.) zur Verfügung steht. Durch die (1,69 x 1,22)-fache Anzahl von Pixeln im trapezförmig verzerrten verkämmten Ergebnisbild 63 gegenüber der notwendigen Pixelzahl im korrigierten Endbild 71 ist der notwendige Datenüberschuss vorhanden, um eine bezüglich der geforderten Auflösung (z.B. 500 dpi) quasi verlustfreie Transformation durchführen zu können.
Die dazu anzuwendende mathematisch durch Zentralprojektion modellierte rechentechnische Entzerrung (nachfolgend mit Bezug auf Fig. 9 beschrieben) kann mit der bereits in den vorstehenden Beispielen beschriebenen elektronischen Verfahrensweise kombiniert oder ergänzt werden.

Anhand von Figur 8 soll die Entstehung eines verkämmten Ergebnisbildes 63 durch Subpixelabtastung am Beispiel des (2 x 2) - Mikroscans erläutert werden. In der linken oberen Darstellung ist ein Ausschnitt der Matrix 56 mit neun lichtempfindlichen Elementen 54 dargestellt, wobei letztere einen Mittenabstand (Pixelraster) dx und dy haben. Es wird ein erstes Teilbild 62 eingezogen (abgetastet), das in der links oben als "1. Abtastposition" bezeichneten Darstellung von Fig. 8 als Signalwerte (Daten) der neun gezeigten Pixelflächen aufzufassen ist. Die Matrix 56 wird danach durch mechanische Verschiebung aus der 1. Abtastposition um dx/2 in eine 2. Abtastposition verschoben (Teilbild 62 oben rechts). Dadurch werden die lichtempfindlichen Elemente 54 in einen vorher lichtunempfindlichen Bereich geschoben und ein zweites Teilbild 62 in Form von neuen Signalwerten (Daten) in veränderter Position eingezogen, die durch schraffiert ausgefüllten lichtempfindlichen Elemente 45 dargestellt sind. Die Zusammenschau der Ausgangsposition der Matrix 56 mit den Daten aus dem zweiten Abtastschritt ergibt eine doppelte Auflösung in Zeilenrichtung (hier: lückenlose Abtastung). Die Auflösungsvergrößerung lässt sich in Spaltenrichtung analog erzeugen (Teilbilder 62 für den 3. und 4. Abtastschritt) und wird in Fig. 8 in der mittleren rechten und mittleren linken Darstellung verdeutlicht, wobei die rechte Darstellung den 3. Abtastschritt und die linke den abschießenden 4. Abtastschritt darstellt. Die Zusammenschau des 4. Abtastschrittes mit der Ausgangsposition der Matrix 56 weist wiederum deutlich die verdoppelte Auflösung in y-Richtung aus.
Das in Fig. 8 unten dargestellte verkämmte Ergebnisbild 63, das beim (2 x 2)- Mikroscan mit lichtäquivalenten Signalwerten (Daten) gemäß den unterschiedlich markierten lichtempfindliche Flächen 54 aus den vier Positionen der Teilbilder 62:
1. Abtastschritt: ohne Schraffur,
2. Abtastschritt: schräg nach links schraffiert,
3. Abtastschritt: Karostruktur,
4. Abtastschritt: schräg nach rechts schraffiert
   zeilen- und spaltenrichtig zusammengesetzt wird, hat in beiden Richtungen die doppelte Auflösung gegenüber der Auslesung einer nicht mit Mikroscanschritten bewegten Matrix 56.
Die Auflösung kann auch bei Bedarf durch Verschiebung der Matrix 56 in 3, 4, ...., n Schritten um x/3, x/4, ...., x/n, bzw. in 3, 4, ...., m Schritten um y/3, y/4, ..., y/m in Abhängigkeit vom Verhältnis von lichtempfindlichen und lichtunempfindlichen Flächen weiter erhöht werden.
Deshalb soll noch gesondert auf eine bevorzugt anzuwendende Ausführung der Subpixelabtastung in Form eines (n x m) - Mikroscans eingegangen werden.

In diesem Beispiel soll von einer Auflagefläche 21 mit den Abmessungen 130 x 143 mm² ausgegangen werden. Diese wird (mit Bezug auf Fig. 2) über das bereits oben näher bezeichnete Objektiv 4 (Tessar 4,5/50) in ein trapezförmig verzerrtes Abbild 51 mit einem umschreibenden Rechteck von 8,71 x 6,84 mm² auf den Bildsensor 5 abgebildet, wobei das das Abbild 51 umschreibende Rechteck nahezu die verfügbare Fläche der lichtempfindlichen Elemente 54 der Matrix 56 ausfüllt. Die Auflagefläche 21 mit einem Seitenverhältnis von 1 : 1,1 wird somit über die optische Abbildung des Objektivs 4 in ein Abbild 51 umgewandelt, das die Matrix 56 mit einem Seitenverhältnis von 1 : 0,79 optimal ausnutzt.
Als Bildsensor 5 wird wiederum eine CCD-Matrix 56 (z.B. SONY, Typ ICX085AL oder eine andere geeignete CCD- oder CMOS-Matrix) mit 1300 x 1030 quadratischen lichtempfindlichen Elementen 54 und einem Pixelraster von 6,7 x 6,7 µm² eingesetzt. Die Matrix 56 wird - wie beim (n x n) - Mikroscan - mit der kurzen Seitenlänge in Richtung der Stauchung (Höhenverkürzung) des Abbildes 51 (d.h. in y-Richtung) ausgerichtet. Eine geforderte Auflösung von 500 dpi im korrigierten Endbild 71 kann mit einer solchen Anordnung aus dem verzerrten Abbild 51 nur erreicht werden, wenn die Matrix 56 (mindestens) mit einem 3 x 4 Mikroscan mit einer Schrittweite von 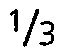 Pixelabstand (hier 2,233 µm) in jeweils drei Schritten in x-Richtung und mit einer Schrittweite von ¼ Pixelabstand (hier 1,675 µm) jeweils vier Schritten in y-Richtung bewegt wird. Prinzipiell wird auf die Vorgehensweise von Fig. 8 Bezug genommen, wobei die Anzahl der Mikroscan-Abtastschritte auf insgesamt zwölf ansteigt und vorzugsweise ein mäanderförmiges Verschiebungsmuster angewendet wird. Die so in zwölf Positionen erhaltenen Teilbilder 62 weisen im Unterschied zu dem in Fig. 8 gezeigten Abtastmuster des (2 x 2) - Mikroscans jeweils Überlappungen der einzeln abgetasteten Teilbilder 62 auf, so dass die Informationsgewinnung zu einer höheren Auflösung (einem größeren Datenüberschuss) gegenüber dem obigen (2 x 2) - Scan führt. Dabei ist die in y-Richtung noch größere Abtastdichte deshalb notwendig um die Stauchung des Abbildes 51 ohne Informationsverlust entzerren zu können. Die einzelnen Teilbilder 62 werden im Bildspeicher 61 zeilen- und spaltenrichtig verkämmt, wobei sich durch die größere Anzahl von Abtastschritten in y-Richtung schon eine teilweise Entzerrung (analog der zu Fig. 6 beschrieben teilweisen Streckung in y-Richtung) ergibt. Infolge der Verkämmung der Teilbilder 62 entsteht im Bildspeicher 61 ein noch immer trapezförmig verzerrtes Ergebnisbild 63 aus ca. 3900 x 4120 Pixeln.
Dieses (infolge der Subpixelabtastung des Abbildes 51) hochaufgelöste Ergebnisbild 63 wird nun mit einem vorher ermittelten Korrekturparametersatz entzerrt. Bei einer geforderten Auflösung von 500 dpi muss das korrigierte Endbild 71 aus 2560 x 2815 Pixeln bestehen. Durch die (1,52 x 1,46)-fache Anzahl von Pixeln im verkämmten Ergebnisbild 63 gegenüber der notwendigen Pixelzahl im korrigierten (entzerrten) Endbild 71 ist ein hinreichend großer Informationsüberschuss vorhanden, um eine bezüglich der gewünschten Auflösung quasi verlustfreie Transformation durchführen zu können.

Die trapezförmige Verzerrung lässt sich gut mathematisch erfassen und durch die Wahl eines geeigneten Korrekturparametersatzes durch Bildverarbeitungsalgorithmen einfach korrigieren. Dabei liegt die in Fig. 4 eindimensional skizzierte Zentralprojektion zur Erstellung des Parametersatzes zugrunde. Die rechentechnische Korrektur bietet den Vorteil einer hohen Flexibilität und die Möglichkeit durch eine einfache Änderung des Parametersatzes jede beliebige Paarung der Größen von Prismen 2 und Bildsensoren 5 zu korrigieren und ein Endbild 71 mit gewünschter Auflösung in der Ausgabeeinheit 7 auszugeben. Die vorhandene Verzerrung des nach dem Mikroscan verkämmten Ergebnisbildes 63 kann durch elektronische und/oder rechentechnische Operationen mit sehr geringem Verlust an Bildinformation anhand eines Korrekturparametersatz erfolgen, der entweder für eine ganze Serie von Geräten (mit gleicher optischer Konfiguration) oder bei sehr hohen Anforderungen an die Geometrietreue für jedes einzelne Gerät ermittelt wird. Der Korrekturparametersatz wird durch Auflegen einer genau bekannten Vorlage 31 (z.B. analog zu Fig. 3) und Messung der Verzerrung im nicht korrigierten Abbild 51 exakt ermittelt, d.h. für jedes Gerät kalibriert.

Fig. 9 soll den Vorgang der Interpolations- und Mittelungsoperationen aus dem Datenüberschuss noch einmal näher erläutern. Dargestellt ist das regelmäßige Ablagemuster eines vom Bildsensor 5 bereitgestelltes, ggf. durch einen Mikroscan höher aufgelöstes zeilen- und spaltenrichtig verkämmtes Ergebnisbild 63. Ob durch den Abtastprozess und die nachfolgende Zwischenspeicherung im Bildspeicher 61 schon eine teilweise Entzerrung stattgefunden hat, kann außer Betracht bleiben, solange die Korrektur (Entzerrung) nicht vollständig erfolgt ist. Der gezeichnete Ausschnitt von sechzehn Pixeln, die auf Grundlage ihrer metrischen Lage der Abtastpunkte geordnet im Bildspeicher 61 abgelegt worden sind, enthält die obere linke Ecke des abgetasteten Abbildes 51 der Auflagefläche 21. Die scharfe Begrenzung des Abbildes 51 dient lediglich der vereinfachten Darstellung. Tatsächlich werden die Pixel P₁₂ bis P₁₄ sowie P₂₂ bis P₄₂ ein kleineres Signal (der aufgenommenen Intensität) beinhalten und somit gleitend den Rand des Abbildes 51 anzeigen. Dazu sind im Stand der Technik hinreichend viele Algorithmen zur Kantendetektion bekannt. Mit dem oben erwähnten Prinzip der Zentralprojektion und unter Nutzung von Kalibrierungsvorlagen 31 ist aus dem Umriss des Abbildes 51 (und ggf. einigen zusätzlichen Merkmalen der Kalibrierungsvorlage 31) ein Verteilungsmuster der für die gewünschte Auflösung im Endbild 71 erforderlichen Anzahl und Lage (einschließlich der Form infolge der Verzerrung) mathematisch einfach bestimmbar. Fig. 9 zeigt als schraffierte Fläche ein so bestimmtes Pixel zur Zusammenfassung der dafür zu nutzenden Information (Pixeldaten) aus dem im Bildspeicher 61 abgelegten Ergebnisbild 63, das bereits zeilen- und spaltenrichtig verkämmt ist. Die Information des schraffiert dargestellten korrigierten Pixels 72 im Endbild 71 wird nun entsprechend den Flächenanteilen der beteiligten Pixel P₁₂ bis P₁₄, P₂₂ bis P₂₄ und P₃₂ bis P₃₄ des zwischengespeicherten Ergebnisbildes 63 durch Mittelungsoperationen der gespeicherten Pixeldaten sowie eine Interpolation des Pixelschwerpunkts bestimmt.
Die nicht für die Gewinnung des Endbildes 71 notwendigen Pixel des Ergebnisbildes 63, d.h. nicht vom trapezförmigen Abbild 51 belichtete Randpixel, können zur Übertragung zusätzlicher optischer oder Verarbeitungsinformationen genutzt werden. Bezüglich der Darstellung von Fig. 9 wären das z.B. die Pixel P₃₁ und P₄₁.

Mit der oben beschriebenen Vorgehensweise der Behandlung optisch nicht korrigierter Abbilder 51 der Auflagefläche 21 allein durch elektronische und rechentechnische Entzerrung sind schwere und in komplizierten Justierfassungen gehalterte optische Korrekturelemente in der erfindungsgemäßen Anordnung vollkommen entbehrlich. Das Gewicht einer Anordnung gemäß den Fig. 1 oder 2 wird im Wesentlichen nur noch von Prisma 2, Objektiv 4, Bildsensor 5, von mechanischen Verbindungselementen (nicht dargestellt) sowie der (an sich leichten) Auswerteelektronik bestimmt und kann damit auch bei großen Auflageflächen 21 relativ gering gehalten werden.
Die Anordnung ist unempfindlicher gegen Dejustierung, weil die genaue Justierung einer Vielzahl von Abbildungs- und Korrekturelementen nicht mehr notwendig ist. Nachjustierungen geschehen stets durch Anpassung des verwendeten Korrekturparametersatzes elektronisch und rechentechnisch.
Da zwischen Prisma 2 und Objektiv 4 kein weiteres optisches Bauelement positioniert werden muss, kann der Strahlengang in diesem Bereich durch Planspiegel beliebig umgelenkt werden, um eine geringe Baugröße oder den Einbau in ein vorgegebenes Volumen besser zu realisieren.

### Bezugszeichenliste

- 1: Lichtquelle
- 11: LED
- 12: Steuscheibe

- 2: Prisma
- 21: Auflagefläche
- 22: Lichtaustrittsfläche
- 23: Lichteintrittsfläche

- 3: Messobjekt
- 31: Vorlage

- 4: Objektiv
- 41: optische Achse

- 5: Bildsensor
- 51: Abbild (der Auflagefläche)
- 52: Abtast- und Auslese-Einheit
- 53: Empfängerfläche
- 54: lichtempfindliche Elemente
- 55: Zeilenempfänger
- 56: Matrix

- 6: Entzerrungseinrichtung
- 61: Bildspeicher
- 62: elektronische Entzerrungseinheit
- 63: rechentechnische

- 7: Ausgabeeinheit
- 71: (korrigiertes) Endbild
- 72: korrigiertes Pixel

## Patentansprüche

1. Anordnung zur verzerrungsarmen Aufnahme von an einer Auflagefläche durch gestörte Totalreflexion entstehenden Intensitätsmustern, mit einer Lichtquelle, einem Prisma, das die Auflagefläche beinhaltet, und einem Bildsensor, wobei die von der Lichtquelle beleuchtete Auflagefläche auf den Sensor derart abgebildet wird, dass an der Auflagefläche totalreflektiertes Licht der Lichtquelle, das teilweise durch Kontakt mit anliegenden Bereichen eines Messobjekts in seiner Totalreflexion gestört ist, als Intensitätsmuster der Auflagefläche auf den Bildsensor abgebildet wird, **dadurch gekennzeichnet, dass**
- zur Abbildung der Auflagefläche (21) auf den Bildsensor (5) lediglich ein abbildendes optisches System (4) vorgesehen ist und der Bildsensor (5) bezüglich der Achse (41) des optischen Systems (4) entgegengesetzt zur Neigung der Auflagefläche (21) geneigt ist, so dass auf dem Bildsensor (5) ein verzerrtes, in allen Bildteilen scharfes Abbild (51) der Auflagefläche (21) vorhanden ist,
- mit dem Bildsensor (5) eine wesentlich größere Anzahl von Bildelementen (Pixeln) aufnehmbar ist, als sie für eine in einem ausgabeseitigen Endbild (71) des Intensitätsmusters geforderte Auflösung notwendig wäre, und somit ein Datenüberschuss in Bezug auf das Endbild (71) vorhanden ist, und
- dem Bildsensor (5) eine Verarbeitungseinheit (6) zur elektronischen oder rechnerischen Entzerrung von Bilddaten durch Änderung von Pixelschwerpunktdaten auf Basis von Verschiebungsprozessen und/oder Interpolations- und Mittelungsoperationen aus dem Datenüberschuss nachgeordnet ist, wobei infolge der erhöhten Zahl der Pixel gegenüber der notwendigen Zahl der Pixel des Endbildes (71) des Intensitätsmusters eine verlustarme Entzerrung erfolgt.

2. Anordnung nach Anspruch 1, **dadurch gekennzeichnet, dass**
die Auflagefläche (21), soweit diese in den zwei Dimensionen der Ebene unterschiedliche Abmessungen hat, eine Längsrichtung und eine Querrichtung aufweist und die Längsrichtung die größere Abmessung bezeichnet, mit der Längsrichtung parallel zu einer von einfallendem und reflektiertem Licht aufgespannten Reflexionsebene ausgerichtet ist und auf der Reflexionsebene senkrecht steht, so dass das Abbild (51) der Auflagefläche (21) eine annähernd quadratische Fläche des Bildsensors (5) ausfüllt, wobei das Abbild (51) der Auflagefläche (21) in Längsrichtung gestaucht und in der Querrichtung trapezförmig verzerrt auf dem Bildsensor (5) abgebildet wird.

3. Anordnung nach Anspruch 1, **dadurch gekennzeichnet, dass**
das abgetastete Abbild (51) der Auflagefläche (21) eine in beiden Dimensionen mindestens um den Faktor 1,1 größere Anzahl von Pixeln aufweist, als sie für die im entzerrten Endbild (71) gewünschte Auflösung erforderlich ist.

4. Anordnung nach Anspruch 1, **dadurch gekennzeichnet, dass**
mit dem Bildsensor (5) in einer Dimension seiner Empfängerfläche (53), die gegenüber der optischen Achse (41) des optischen Systems (4) geneigt und der Längsrichtung der Auflagefläche (21) zugeordnet ist, eine höhere Dichte der Pixel abtastbar ist als in der anderen Dimension.

5. Anordnung nach Anspruch 4, **dadurch gekennzeichnet, dass**
der Bildsensor (5) eine lichtempfindliche Empfängerfläche (53) mit in beiden Dimensionen unterschiedlicher Dichte der lichtempfindlichen Elemente (54) aufweist, wobei die Empfängerfläche (53) eine Matrix (56) ist und in einer Dimension, die der Längsrichtung der Auflagefläche (21) zugeordnet ist, eine höhere Dichte der lichtempfindlichen Elemente (54) aufweist als in der anderen Dimension.

6. Anordnung nach Anspruch 4, **dadurch gekennzeichnet, dass**
der Bildsensor (5) eine Empfängerfläche (53) mit in beiden Dimensionen gleichmäßigen Pixelabständen aufweist, wobei die Empfängerfläche (53) eine Matrix (56) ist und mindestens in einer Dimension, die der Längsrichtung der Auflagefläche (21) zugeordnet ist, um Bruchteile des Matrixrasters (dx; dy) verschiebbar ist, um mindestens eine Subpixelabtastung in dieser Dimension auszuführen.

7. Anordnung nach Anspruch 3, **dadurch gekennzeichnet, dass**
die Anzahl der abgetasteten Pixel des Abbildes (51) bezüglich der Längs- und Querrichtung der Auflagefläche (21) durch einen zweidimensionalen Microscan-Prozess in der Anzahl von Subpixelabtastungen des Abbildes (51) beliebig einstellbar ist.

8. Anordnung nach Anspruch 4, 5, 6 oder 7, **dadurch gekennzeichnet, dass**
die Anzahl der abgetasteten Pixel des Abbildes (51) bezüglich der Längs- und Querrichtung der Auflagefläche (21) durch einen zweidimensionalen Microscan-Prozess mit unterschiedlicher Anzahl von Subpixelabtastungen des Abbildes (51) beliebig einstellbar ist, wobei eine erhöhte Anzahl von Abtastschritten in der Dimension des Abbildes (51), die der Längsrichtung der Auflagefläche (21) zugeordnet ist, an die Stauchung des Abbildes (51) in dieser Dimension angepasst ist.

9. Anordnung nach Anspruch 4, **dadurch gekennzeichnet, dass**
der Bildsensor (5) eine Empfängerfläche (53) mit in beiden Dimensionen unterschiedlicher Dichte der lichtempfindlichen Elemente (54) aufweist, wobei in der Dimension der Empfängerfläche (53), die der Querrichtung der Auflagefläche (21) zugeordnet ist, eine Empfängerzeile (55) angeordnet ist und in der Dimension, die der Längsrichtung der Auflagefläche (21) zugeordnet ist, die Empfängerzeile (55) mit einer an die Verkürzung des Abbildes (51) in der Längsrichtung der Auflagefläche (21) angepassten Abtastschrittweite bewegt wird.

10. Anordnung nach Anspruch 9, **dadurch gekennzeichnet, dass**
die Empfängerzeile (55) mit einer an die reale Stauchung des Abbildes (51) angepassten, sukzessive verkürzten Abtastschrittweite bewegt wird.

11. Anordnung nach Anspruch 4, 5, 6, 8 oder 9, **dadurch**
**gekennzeichnet, dass** die Anzahl der vom Bildsensor (5) abgetasteten Pixel des Abbildes (51), bezogen auf das Verhältnis von Quer- zu Längsrichtung der Auflagefläche (21), ein Verhältnis zwischen 0,5 und 1 aufweist.

12. Anordnung nach Anspruch 1, **dadurch gekennzeichnet, dass**
zur Anpassung unterschiedlicher Verhältnisse von Längs- zu Querrichtung der Auflagefläche an das Format der Empfängerfläche (53) des Bildsensors (5) Prismen (2) mit verschiedenem Brechungsindex vorgesehen sind, wobei infolge verschiedener Brechungsindizes von ausgewählten Prismen (2) unterschiedliche Winkel der Totalreflexion an der Auflagefläche (21) und somit ein unterschiedlicher Grad der Stauchung des Abbildes (51) der Auflagefläche (21) auf dem Bildsensor (5) einstellbar ist.

13. Anordnung nach Anspruch 1, **dadurch gekennzeichnet, dass**
im optischen Strahlengang zwischen der Auflagefläche (21) des Prismas (2) und dem Bildsensor (5) Strahlumlenkelemente zur raumsparenden Faltung des Strahlengangs vorgesehen sind.

14. Verfahren zur Aufnahme von an einer Auflagefläche durch gestörte Totalreflexion entstehenden Intensitätsmustern, bei dem die Totalreflexion an der Auflagefläche (durch Kontakt mit anliegenden Bereichen eines Messobjekts teilweise gestört wird, mit folgenden Schritten:
- homogenes Beleuchten der Auflagefläche (21) mit einer Lichtquelle (1) unter einem Winkel der Totalreflexion,
- Abbilden der Auflagefläche (21) auf einen Bildsensor (5) derart, dass ein Abbild (51) der Auflagefläche (21) als Intensitätsmuster lediglich über ein abbildendes optisches System (4) auf dem Bildsensor (5) erzeugt wird, so dass das Abbild (51) auf dem Bildsensor (5) verzerrt, jedoch in allen Bildteilen scharf abgebildet ist und an der Auflagefläche (21) totalreflektiertes Licht der Lichtquelle (1) in das optische System (4) eintritt,
- Aufnehmen des Abbildes (51) der Auflagefläche (21) durch den Bildsensor (5) mit wesentlich mehr Bildelementen (Pixeln), als für die gewünschte Auflösung im ausgabeseitigen Endbild (71) des Intensitätsmusters erforderlich sind, und
- Entzerrung des optoelektronisch gewandelten, trapezförmig verzerrten Abbildes (51) mittels Interpolations- und Mittelungsoperationen auf Basis der Erzeugung von zusammengefassten Pixeldaten aus einem Datenüberschuss, der infolge der erhöhten Anzahl von aufgenommenen Pixeln gegenüber der notwendigen Zahl der Pixel eines auszugebenden Endbildes (71) vorhanden ist.

15. Anordnung nach Anspruch 14, **dadurch gekennzeichnet, dass**
das optoelektronisch gewandelte, trapezförmig verzerrte Abbild (51) mittels elektronischer Taktverschiebung und Verkämmung von Pixeldatenströmen im Auslese- und Speicherungsprozess eines Bildes (63) entzerrt wird, wobei der Datenüberschuss, der infolge der erhöhten Anzahl von aufgenommenen Pixeln gegenüber der notwendigen Zahl der Pixel eines auszugebenden Endbildes (71) vorhanden ist, zur Erzeugung korrigierter Pixelzuordnungen benutzt wird.

16. Verfahren nach Anspruch 15, **dadurch gekennzeichnet, dass**
- das Abbild mit einer Empfängerzeile (55) in unterschiedlich großen Abtastschritten in einer ersten Dimension des Bildsensors (5), die zur Achse (41) des optischen Systems (4) geneigt ist, abgetastet wird, wobei die Größe der Abtastschritte während einer Abtastung des kompletten Abbildes (51) der Auflagefläche (21) sukzessive entsprechend der realen Stauchung des Abbildes (51) geändert wird, und
- das optoelektronisch gewandelte Abbild (51) durch zeilenrichtiges Verkämmen der Pixeldatenströme und verändertes Takten der Zeilendatenströme von unterschiedlich langen Zeilen des Abbildes (51) zu verdichteten Zeilen mit einheitlicher Pixelzahl elektronisch entzerrt wird.

17. Verfahren nach Anspruch 16, **dadurch gekennzeichnet, dass**
das Abtasten des Abbildes (51) in der zweiten Dimension, die orthogonal zur Achse (41) des optischen Systems (4) ausgerichtet ist, mittels einer Empfängerzeile (55) erfolgt, wobei die Empfängerzeile (55) in der ersten Dimension, die gegenüber der Achse (41) des optischen Systems (4) geneigt ist, mechanisch verschoben wird.

18. Verfahren nach Anspruch 14, **dadurch gekennzeichnet, dass**
das optoelektronisch gewandelte, trapezförmig verzerrte Abbild (51) aus dem Datenüberschuss, der infolge der erhöhten Anzahl von aufgenommenen Pixeln vorhanden ist, allein mittels Berechnung von zusammengefassten Pixeldaten, die dem gewünschten Pixelraster des auszugebenden Endbildes (71) entsprechen, auf Basis von Interpolations- und Mittelungsoperationen entzerrt wird.

19. Verfahren nach Anspruch 18, **dadurch gekennzeichnet, dass**
- das Abbild (51) der Auflagefläche (21) mit einer Empfängermatrix (56) in mindestens einer Dimension der Matrix (56) in Subpixelschritten abgetastet wird und
- das elektronisch gewandelte Abbild (51) durch elektronisches zeilen- und spaltenrichtiges Verkämmen und anschließende Berechnung von korrigierten Pixeldaten, die der metrischen Pixelzahl des gewünschten Endbildes (71) entsprechen und Mittelungen und Interpolationen von prozentualen Signalanteilen benachbarter Pixel auf Basis einer Pixelzusammenfassung beinhalten, entzerrt wird.

20. Verfahren nach Anspruch 19, **dadurch gekennzeichnet, dass**
das Abbild (51) in einer Dimension der Matrix (56), die gegenüber der Achse (41) des optischen Systems (4) geneigt ist, enger abgetastet wird.

21. Verfahren nach Anspruch 19, **dadurch gekennzeichnet, dass**
das Abbild (51) mit einer zweidimensional gleichmäßigen Subpixelverschiebung der Matrix (56) abgetastet wird, wobei entsprechend der Stauchung des Abbildes (51), die in der gegenüber der Achse (41) des optischen Systems (4) geneigten Dimension der Matrix (56) auftritt, die Abtastdichte so groß gewählt wird, dass sie bei einer Entzerrung der Stauchung mindestens eine im auszugebenden Endbild (71) geforderte Pixelzahl übersteigt, und die Stauchung bei der Berechnung der zusammengefassten Pixel für das Endbild (71) entzerrt wird.

22. Verfahren nach Anspruch 14, **dadurch gekennzeichnet, dass**
das optoelektronisch gewandelte, trapezförmig verzerrte Abbild (51) auf Basis des Datenüberschusses, der aus der erhöhten Anzahl von aufgenommenen Pixeln resultiert, mittels einer Kombination aus elektronischen Verschiebeprozessen und Berechnung von zusammengefassten Pixeldaten durch rechnerische Interpolationsund Mittelungsoperationen entzerrt wird.

23. Verfahren nach Anspruch 22, **dadurch gekennzeichnet, dass**
das Abbild (51) in der ersten Dimension, die zur Achse (41) des optischen Systems (4) geneigt ist, mit einer höheren Dichte gegenüber der zweiten Dimension abgetastet wird, wobei das Abbild (51) in der besagten ersten Dimension mindestens zu einem wesentlichen Teil elektronisch durch geeignete Abtast- und Speicherprozesse gestreckt wird und die vollständige Entzerrung mittels Berechnung von zusammengefassten Pixeldaten erfolgt.

24. Verfahren nach Anspruch 23, **dadurch gekennzeichnet, dass**
das Abbild (51) mit einer Empfängermatrix (56) abgetastet wird, die in Spaltenrichtung einen geringeren Abstand der lichtempfindlichen Elemente (54) als in Zeilenrichtung aufweist.

25. Verfahren nach Anspruch 23, **dadurch gekennzeichnet, dass**
das Abbild (51) mit einer symmetrischen Matrix (56) abgetastet wird, wobei die Matrix (56) mittels einer geeigneten Verschiebeeinrichtung in der ersten Dimension, die zur Achse (41) des optischen Systems (4) geneigt ist, eine Subpixelabtastung mit größerer Anzahl von Abtastschritten ausführt als in der zweiten Dimension.

26. Verfahren nach Anspruch 23, **dadurch gekennzeichnet, dass**
das Abbild (51) in der zweiten Dimension, die orthogonal zur Achse (41) des optischen Systems (4) ausgerichtet ist, mittels einer Empfängerzeile (55) abgetastet wird und die Empfängerzeile (55) in der ersten Dimension, die gegenüber der Achse (41) des optischen Systems (4) geneigt ist, mechanisch verschoben wird, wobei die Empfängerzeile (55) mit Abtastschritten bewegt wird, die kleiner sind als die Abstände der lichtempfindlichen Elemente (54) in Zeilenrichtung.

27. Verfahren nach Anspruch 26, **dadurch gekennzeichnet, dass**
die Empfängerzeile (55) in der ersten Dimension mit Abtastschritten bewegt wird, die kleiner sind als die Abstände der lichtempfindlichen Elemente (54) in Zeilenrichtung und die in der Schrittweite sukzessive entsprechend der realen Stauchung des Abbildes (51) angepasst werden.
